# EUROPEAN PATENT SPECIFICATION

(11) **EP 2 991 471 B1**
(45) Date of publication and mention of the grant of the patent: **15.08.2018**
(21) Application number: 14729151.2
(22) Date of filing: 01.05.2014
(51) Int. Cl.: A01F 12/40

(54) **COUNTER KNIFE BANK DEBRIS PREVENTION**
ABFALLVERHINDERUNG BEI EINEM GEGENSCHNEIDWERK
PRÉVENTION CONTRE LES DÉBRIS POUR RANGÉE DE CONTRE-LAMES

(30) Priority: 01.05.2013 US 201361818268 P
(43) Date of publication of application: 09.03.2016
(73) Proprietor: CNH Industrial Belgium N.V., 8210 Zedelgem (BE)
(72) Inventor: ISAAC, Nathan, E., Lancaster, PA 17601 (US); DILTS, Mark, D., New Holland, PA 17557 (US)
(74) Representative: CNH Industrial IP Department
(86) International application number: PCT/US2014/036358
(87) International publication number: WO 2014/179563

(56) References cited:
- EP-A1- 0 960 561
- EP-A1- 2 000 019
- US-A- 3 738 584
- US-B1- 8 141 805

## Description

### BACKGROUND OF THE INVENTION

### 1. Field of the Invention

The present application relates to chopper assemblies for a combine and more specifically to a system in which the accumulation of debris is prevented on the counter knife bank assemblies used in such combines.

### 2. Description of the Related Art

Harvesting equipment such as agricultural combines frequently use integral chopper assemblies or systems to transport material away from the threshing system and also to treat the material by further cutting. It is frequently necessary to employ a residue chopper assembly that has a rotary chopper apparatus disposed within the combine housing and extending generally transverse across the path of the crop residue. A chopper grate assembly extends along the rotary chopper apparatus and has a plurality of slots through which knives attached to a counter knife bank apparatus adjustably project. The interaction between the rotary chopper and the counter knife bank apparatus cuts and reduces the size of the crop residue. In order to accommodate variable field and/or crop conditions it is necessary to provide a variation in the degree to which the knives of the counter knife bar apparatus extend through the slots in the chopper grate. The knives, when fully inserted through the slots in the chopper grate, produce a fine consistency to the chopped crop residue whereas the retraction of the knives from the slots produces a coarser consistency. Such device is know from US 8141805 B1, which discloses the preamble of claim 1.

The harvesting and threshing process produces a great deal of crop residue which is accelerated through the combine and propelled rearward by the crop processing system (rotor) used in the processing of the crop material. Since the rotary chopper assembly is at the downstream end of the path of the crop residue, it is fully impacted by the debris carried around in the flow path through the combine. It has been found that the debris particularly collects adjacent the leading edge of the knife elements used in the counter knife bar apparatus causing what is known as "hairpinning" so that debris spans the leading edge of the knife elements at the point at which they enter the slots. The accumulation of the debris across the slots prevents free movement of the counter knife bar apparatus and requires frequent cleaning of the mechanism.

What is needed in the art therefore, is a chopper assembly in which debris is prevented from accumulating in the slots of the chopper grate assembly and the counter knife bar apparatus.

### SUMMARY OF THE INVENTION

The invention seeks to provide a mechanism for preventing debris from accumulating between the chopper grate slots and the counter knife bar assemblies.

The invention, in one form, is a chopper assembly for harvesting equipment including a rotary chopper device and a chopper grate assembly spaced from the rotary chopper device to form a passage way for crop residue. The chopper grate assembly includes a plurality of slots extending in the direction of crop residue flow through the passageway. A knife bank assembly includes a plurality of knife elements aligned with and insertable in the slots. The knife bank assembly is displaceable toward a position where the knife elements are fully inserted through the slots into the passageway and a position where they are substantially clear of the passageway. The slots have an expanded width at the point at which the knife elements first enter the grate assembly slots to prevent accumulation of debris.

The invention, in another form, is an agricultural combine with a crop processing apparatus to separate desired crop material from residue and a chopper assembly for receiving crop residue. The chopper assembly includes a rotary chopper device and a chopper grate assembly spaced from the rotary chopper device to form a passageway for crop residue. The chopper grate assembly includes a plurality of slots extending in the direction of crop residue flow through the passageway. A knife bank assembly includes a plurality of knife elements aligned with and insertable in the slots. The knife bank assembly is displaceable toward a position where the knife elements are fully inserted through the slots into the passageway and a position where they are substantially clear of the passageway. A deflector may be provided for covering the slots with the deflector being displaceable with the knife elements to uncover the slots as the knife elements are displaced through the slots and into the passageway. The slots have an expanded width at the point at which the knife elements first enter the grate assembly slots to prevent accumulation of debris.

### BRIEF DESCRIPTION OF THE DRAWINGS

The above-mentioned and other features and advantages of this invention, and the manner of attaining them, will become more apparent and the invention will be better understood by reference to the following description of embodiments of the invention taken in conjunction with the accompanying drawings, wherein:
Fig. 1 is a side view of a combine incorporating a chopper assembly embodying the present invention;
Fig. 2 is a side view of the chopper assembly of Fig. 1;
Fig. 3 is a side view of a chopper assembly incorporating an alternate embodiment of the present invention;
Fig. 4 is a view of a portion of the chopper assemblies of Figs. 2 and 3 taken on lines 4-4 of Figs 2 and 3 showing one configuration of slots of Figs 2 and 3; and
Fig. 5 is a fragmentary view of a chopper assembly incorporating alternate slot configurations.

Corresponding reference characters indicate corresponding parts throughout the several views. The exemplifications set out herein illustrate embodiments of the invention and such exemplifications are not to be construed as limiting the scope of the invention in any manner.

### DETAILED DESCRIPTION OF THE INVENTION

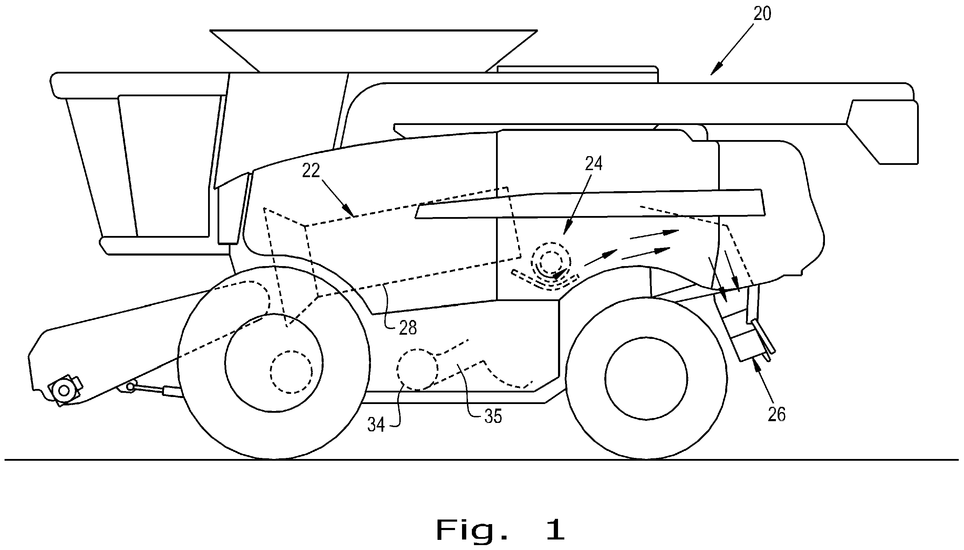

Fig. 1 shows an agricultural combine 20 which includes the usual harvesting apparatus (not all of which is shown to facilitate an understanding of the invention). An axially oriented crop processing system 22 receives harvested crop and a crop residue treatment and distribution system 24 with a crop residue spreader 26 is positioned at the aft end of combine 20. The crop processing system includes a cylindrical threshing rotor 28 that conveys a flow of crop material in a helical flow path. As the crop material is moved through the processing apparatus 22, the desired crop such as grain or other material is loosened and separated from crop residue such as husk and pods in a cleaning system located beneath the threshing rotor 28. The crop processing system 22 includes a blower 34, schematically depicted to aid in the separation of the desired crop from the crop residue. The blower 34 has a duct 35 extending aft in the combine 20 towards the cleaning system and the crop residue treatment and distribution system 24.

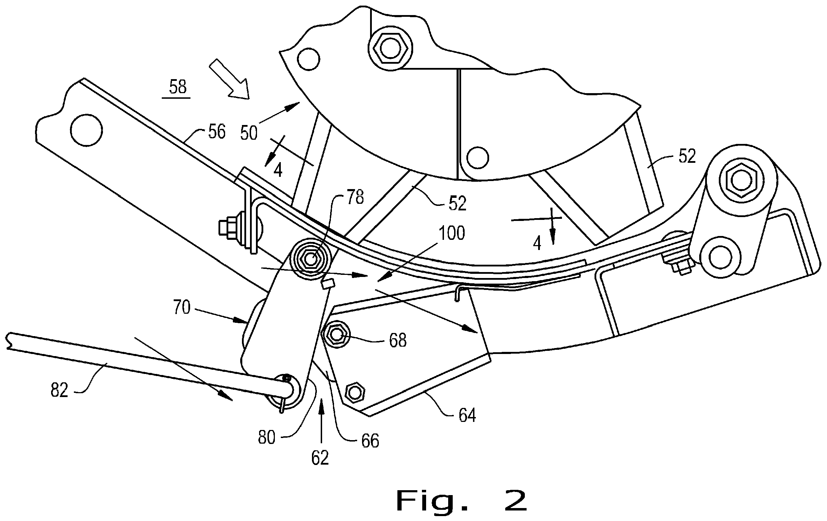

Existing crop residue systems provide the ability to variably chop the crop residue but encounter the problems of crop residue plugging the adjustable apparatus. In accordance with the present invention, the crop residue treatment system 24 shown in Figs. 2-4 minimizes, if not eliminates, plugging by crop residue material.

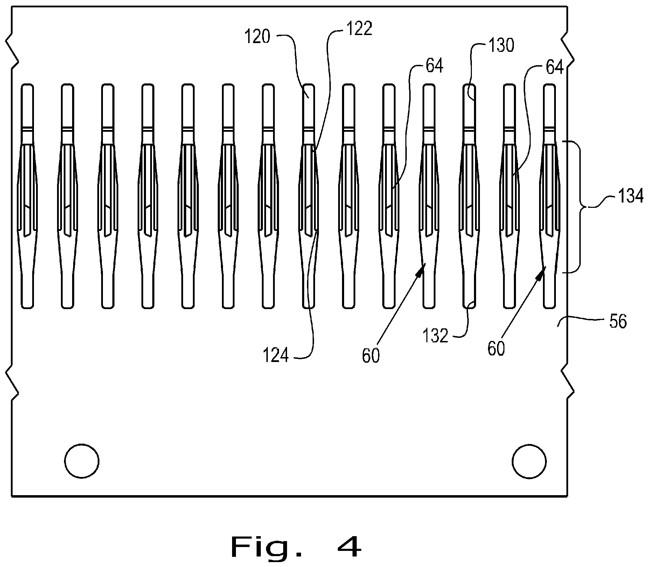

As specifically shown in Fig. 2, crop residue treatment system 24 includes a rotary chopper device 50 which includes a central rotor extending transverse to the flow of crop material and which supports a plurality of knives 52, only two of which are shown. Details of such a rotary chopper device may be found in U.S. Patent 8,141,805, of common assignment with the present invention, which is hereby incorporated in its entirety. Rotary chopper device 50 has adjacent thereto a chopper grate assembly 56 which is formed from sheet material extending substantially the same length as that the axial length of the rotary chopper device 50. The chopper grate assembly 56 is generally cylindrical in form and defines, with the rotary chopper assembly 50, a flow path 58 for crop residue material flowing in direction A. Chopper grate 56 has a plurality of slots 60 (see especially Fig. 4) arranged in side-by-side relation across the width of the crop residue treatment system 24. Slots 60 extend in a direction that is generally parallel to the direction of flow A for the crop residue material.

A knife bank assembly 62 is positioned adjacent the chopper grate 56 and includes a plurality of knife elements 64, only one of which is shown, that are positioned to be inserted through slots 60 and into flow path 58 in between the knives 52 of rotary chopper device 50. Individual knife elements 64 are fixed to mounting frames 66 by removable fasteners 68. Knife mounting frames 66 are all fastened to a main cross frame 70 extending across the length of the crop residue treatment system. Cross frame 70 is pivotally mounted at 78. Knife bank assembly 62 is pivotally displaced by a crank arm 80 that has an inner end and arranged to be pivotal about 78 and an outer end receiving an actuating arm 82. The translation of actuating rod 82 manually or by an actuator causes crank arm 80 to pivot the knife bank assembly 62 from the position shown in Fig. 2 to the position in which the knife elements 64 fully extend into flow path 58 through slots 60.

In existing crop residue treatment systems, debris accumulates across rectangular slots and the leading edge of knife elements 64. In accordance with the present invention, the slots 60 are configured as shown in Fig. 4 to prevent the accumulation of debris.

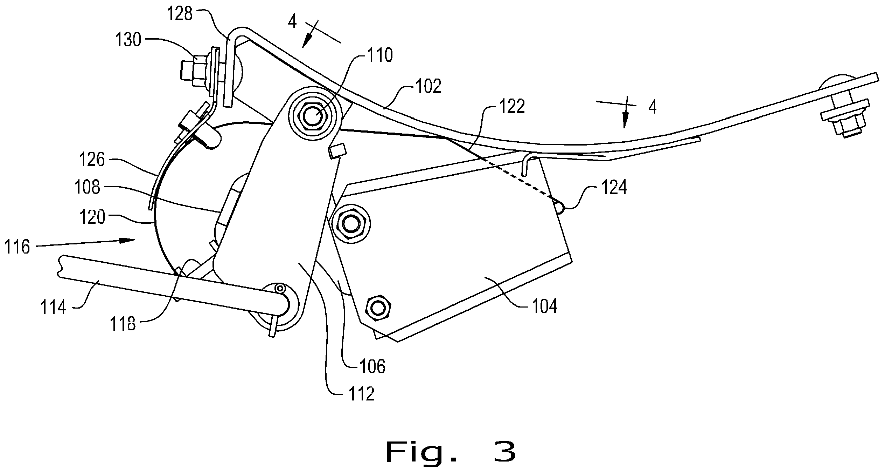

As shown in Fig. 4, which is a partial view of grate 56, the plurality of slots 60 extend in the direction of crop residue flow. The knife elements 64 are shown in the position of Figs. 2 and 3 in which the knife elements are out of the flow path. The slots 60 have upstream sections 130 with parallel sides, downstream sections 132 with parallel sides and an elliptical middle section 60, connected to and as an extension of the upstream and downstream sections 130 and 132. Although many different widths can be employed, the expansion of the slot 60 in this area may be 4 millimeters additional to the width of the slot 60. This width is approximately the width of the knife elements 64. The provision of the expanded section at the point at which the knife elements 64 enter the slot prevents a reduction in flow area by virtue of the knife entry. In existing slot configurations, the entry of the knife significantly reduces the flow area so that debris tends to bridge the gap and be clogged at the leading edge of the blade elements 64. By expanding the slot in that region the flow area for debris is increased so that it tends not to accumulate at that point but more importantly extends to the trailing section 132 where accumulation of any debris is not a problem to the movement of the knife elements into the slots.

Although Fig. 4 shows a debris deflector which will be described in detail in connection with Fig. 3, the provision of the expanded slots has the effect of preventing the hair pinning even in the absence of a deflector.

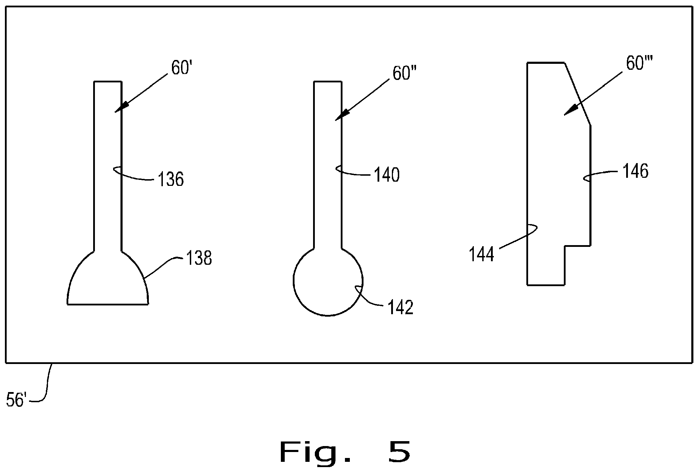

The slot configurations as shown in Fig. 5 other configurations of the slots 60 may be employed. Fig. 5 shows an example of some of the slot configurations for a grate assembly 56'. Slot 60' has a upstream section 136 with parallel sides extending to a roughly triangular downstream section 138 to permit an additional flow path for residue. The slot 60" has an elongated upstream section 140 with parallel sides and a generally circular downstream section 142 for the increased flow of debris. Slot 60 shows a rectangular section 144 extending along one side and an expanded section 146 with an initial tapered section and adjacent rectangular section on the opposite side to allow for an increased flow path for debris to counter act the reduction in flow area provided by the entry of the knife elements. It is also possible to combine the expanded middle section shown in Fig. 4 with either of the configurations of Fig 5.

Fig. 6 shows an alternative embodiment of the invention. In this view, a grate assembly 102 has the plurality of slots as in the previous embodiment through which a plurality of knife elements 104 (only one is shown) extend. The rotary chopper assembly shown in Fig. 2 is omitted to enable a clearer understanding of this aspect of the present invention. The passage for crop residue is adjacent the upper face of the grate assembly 102.

Knife elements 104 are releasably fastened to blade supports 106 which are in turn fastened to a cross frame 108. Frame 108 is pivotally mounted to grate assembly 102 at 110. A crank arm 112 receives displacement inputs from a rod 114 to pivot frame 108 and blade elements 104 to variably extend through the slots in grate assembly 102. As shown in Fig. 6, the knife elements 104 are pivoted to be out of the crop residue passage. The blade elements 104 may be pivoted to a position where they are totally extended through the slots in grate assembly 102 and into the passageway adjacent its upper face.

In accordance with another aspect of the present invention, a deflector 116 is employed to minimize, if not eliminate the buildup of debris between the slot in the grate assembly 102 and the leading edge of the blade elements 104. Deflector 118 includes a continuous sheet 120 having an arc contour and which is fixed to frame 108 at 118. Sheet 120 curves around to abut the bottom face of grate assembly 102 and has slots 122 for embracing opposite faces of the blade elements 104. Sheet 120 ends in trailing edge hook elements 124 that variably extend across the faces of blade elements 104 as they are pivoted into the passageway.

A curved guide 126 is fastened to a flange 128 integral with grate assembly 102 by fasteners 130. The curved guide 126 directs sheet 120 in a path that facilitates following the outer contour of grate assembly 102. Guide 126 also provides a barrier against debris entering the space between the slots in guide assembly 102 and the leading edge of blade elements 102.

In operation, the sheet 120 covers slots in the grate assembly 102 and moves with the pivoting the cross frame 108 to keep debris away. In addition, hook elements 124 provide a cleaning away of debris as the knife elements 104 are pivoted into the slots in grate assembly 102. With the configuration of Fig. 3, the deflector 116 cooperates with the expanded slots described above to further minimize the accumulation of debris. As shown in Fig. 4, the sheet element 120 of deflector 116 is shown with the notch 122 and the trailing edge hook elements 124. As stated above, the configuration of expanding the slots with or without a deflector prevents the accumulation of debris at the leading edge of the knife elements 64.

While this invention has been described with respect to at least one embodiment, the present invention can be further modified within the spirit and scope of this disclosure. This application is therefore intended to cover any variations, uses, or adaptations of the invention using its general principles. Further, this application is intended to cover such departures from the present disclosure as come within known or customary practice in the art to which this invention pertains and which fall within the limits of the appended claims.

## Claims

1. A chopper assembly for harvesting equipment (20), said chopper assembly comprising:
a rotary chopper device (50);
a chopper grate assembly (56) spaced from the rotary chopper device (50) to form a passageway for crop residue, said chopper grate assembly (56) including a plurality of slots (60,60',60",60'") extending in the direction of crop residue flow through said passageway;
a knife bank assembly (62) including a plurality of knife elements aligned with and insertable in said slots (60,60',60",60'"), said knife bank assembly (62) being displaceable toward a position where said knife elements are fully inserted through said slots (60,60',60",60'") into said passageway and a position where they are substantially clear of said passageway; **characterised in that** said slots (60,60',60",60'") have an expanded width at the point at which the knife elements first enter the grate assembly slots (60,60',60",60'") to prevent accumulation of debris.

2. The chopper assembly of claim 1, further comprising a deflector for covering said slots (60,60',60",60'"), said deflector being displaceable with said knife elements to uncover said slots (60,60',60",60"') as said knife elements are displaced through said slots (60,60',60",60"') and into said passageway.

3. The chopper assembly of claim 1, wherein said slots (60) are configured to have end portions with parallel sides and a middle section expanding out in an oval shape.

4. The chopper assembly of claim 3, wherein the middle section increases the width of the slot (60) approximately by the width of the blade elements.

5. The chopper assembly of claim 4, wherein the slot (60) width increase is approximately 4 millimeters.

6. The chopper assembly of claim 1, wherein said slots (60') are configured to have an upstream end portion with parallel sides and a downstream section expanding out in a generally triangular shape.

7. The chopper assembly of claim 1, wherein said slots (60") are configured to have an upstream end portion with parallel sides and a downstream section expanding out in a generally circular shape.

8. The chopper assembly of claim 1, wherein said slots (60,60',60"') are configured to have one side portion rectangular in shape and an opposite side expanding out with an initial taper and a straight section.

9. The chopper assembly of claim 6, wherein said slots are configured to have a middle section expanding out in an oval shape.

10. The chopper assembly of claim 7, wherein said slots are configured to have a middle section expanding out in an oval shape.

11. An agricultural combine (20) comprising:
a crop processing apparatus separating crop material from crop residue and for discharging crop residue therefrom;
a rotary chopper device (50);
a chopper grate assembly (56) according to any one of the claims 1-10.

## Patentansprüche

1. Häcksleranordnung für eine Erntevorrichtung (20), wobei die Häcksleranordnung umfasst:
eine sich drehende Häckselvorrichtung (50);
eine Häckslergitteranordnung (56), die beabstandet von der sich drehenden Häckselvorrichtung (50) angeordnet ist, um einen Durchgang für Erntegutrückstände zu bilden, wobei die Häckslergitteranordnung (56) eine Mehrzahl von Schlitzen (60, 60', 60", 60'") aufweist, die sich in Richtung des Stroms von Erntegutrückständen durch den Durchgang erstrecken;
eine Messerbalkenanordnung (62), die eine Mehrzahl von Messerelementen aufweist, die mit den Schlitzen (60, 60', 60", 60'") ausgerichtet und in diese einführbar sind, wobei die Messerbalkenanordnung (62) in Richtung einer Position, in der die Messerelemente vollständig durch die Schlitze (60, 60', 60", 60'") in den Durchgang eingefügt sind, und einer Position, in der sie den Durchgang im Wesentlichen freigeben, verstellbar ist;
**dadurch gekennzeichnet, dass**
die Schlitze (60, 60', 60", 60'") an der Stelle, an der die Messerelemente zuerst in die Schlitze (60, 60', 60", 60'") der Gitteranordnung eintreten, eine erweiterte Breite aufweisen, um das Ansammeln von Ablagerungen zu verhindern.

2. Häcksleranordnung nach Anspruch 1, weiterhin mit einem Ablenkelement zum Bedecken der Schlitze (60, 60', 60", 60'"), wobei das Ablenkelement mit den Messerelementen verstellbar ist, um die Schlitze (60, 60', 60", 60'") freizugeben, wenn die Messerelemente durch die Schlitze (60, 60', 60", 60'") und in den Durchgang verstellt werden.

3. Häcksleranordnung nach Anspruch 1, wobei die Schlitze (60) derart eingerichtet sind, dass sie Endabschnitte mit parallelen Seiten und einen Mittelabschnitt, der sich in einer ovalen Form erweitert, aufweisen.

4. Häcksleranordnung nach Anspruch 3, wobei der Mittelabschnitt die Breite des Schlitzes (60) in etwa um die Breite der Messerelemente vergrößert.

5. Häcksleranordnung nach Anspruch 4, wobei die Vergrößerung der Breite des Schlitzes (60) in etwa 4 Millimeter beträgt.

6. Häcksleranordnung nach Anspruch 1, wobei die Schlitze (60') derart eingerichtet sind, dass sie einen stromaufwärts gelegenen Endabschnitt mit parallelen Seiten und einen stromabwärts gelegenen Abschnitt, der sich in einer im Wesentlichen dreieckigen Form erweitert, aufweisen.

7. Häcksleranordnung nach Anspruch 1, wobei die Schlitze (60") derart eingerichtet sind, dass sie einen stromaufwärts gelegenen Endabschnitt mit parallelen Seiten und einen stromabwärts gelegenen Abschnitt, der sich in einer im Wesentlichen kreisförmigen Form erweitert, aufweisen.

8. Häcksleranordnung nach Anspruch 1, wobei die Schlitze (60, 60', 60'") derart eingerichtet sind, dass sie einen Seitenabschnitt von rechteckiger Form und eine gegenüberliegende Seite, die sich mit einer anfänglichen Schräge erweitert, und einen geraden Abschnitt aufweisen.

9. Häcksleranordnung nach Anspruch 6, wobei die Schlitze derart eingerichtet sind, dass sie einen Mittelabschnitt aufweisen, der sich in einer ovalen Form erweitert.

10. Häcksleranordnung nach Anspruch 7, wobei die Schlitze derart eingerichtet sind, dass sie einen Mittelabschnitt aufweisen, der sich in einer ovalen Form erweitert.

11. Landwirtschaftlicher Mähdrescher (20) mit:
einer Erntegutverarbeitungsvorrichtung, die Erntegut von Erntegutrückständen trennt und Erntegutrückstände ausgibt;
einer sich drehenden Häckselvorrichtung (50);
einer Häckslergitteranordnung (56) nach einem der Ansprüche 1-10.

## Revendications

1. Ensemble hacheur pour un matériel de récolte (20), ledit ensemble hacheur comprenant :
un dispositif hacheur rotatif (50),
un ensemble de grille de hacheur (56) distant du dispositif hacheur rotatif (50) formant un passage pour les résidus de récolte, ledit ensemble de grille de hacheur (56) comprenant une pluralité de rainures (60, 60', 60", 60"') s'étendant dans le sens de l'écoulement des résidus de récolte à travers ledit passage,
un ensemble table de couteaux (62) comprenant une pluralité d'éléments de couteau alignés avec et insérables dans lesdites rainures (60, 60', 60", 60"'), ledit ensemble de table de couteaux (62) étant déplaçable en direction d'une position où lesdits éléments de couteau sont entièrement insérés à travers lesdites rainures (60, 60', 60", 60"') dans ledit passage et une position où ils sont essentiellement distants dudit passage,
**caractérisé en ce que** rainures (60, 60', 60", 60"') ont une largeur étendue au point où les éléments de couteau pénètrent d'abord dans les rainures de l'ensemble de grille (60, 60', 60", 60"') pour empêcher l'accumulation de débris.

2. Ensemble hacheur selon la revendication 1, comprenant en outre un déflecteur pour couvrir lesdites rainures (60, 60', 60", 60"'), ledit déflecteur étant déplaçable avec lesdits éléments de couteau pour découvrir lesdites rainures (60, 60', 60", 60"') lorsque lesdits éléments de couteau sont déplacés à travers lesdites rainures (60, 60', 60", 60"') et dans ledit passage.

3. Ensemble hacheur selon la revendication 1, dans lequel lesdites rainures (60) sont configurées pour avoir des portions d'extrémité avec des côtés parallèles et une section centrale se terminant par une forme ovale.

4. Ensemble hacheur selon la revendication 3, dans lequel la section centrale augmente la largeur de la rainure (60) de la largeur environ des éléments de lame.

5. Ensemble hacheur selon la revendication 4, dans lequel l'augmentation de largeur de la rainure (60) est d'environ 4 millimètres.

6. Ensemble hacheur selon la revendication 1, dans lequel lesdites rainures (60') sont configurées pour avoir une partie d'extrémité en amont avec des côtés parallèles et une section en aval se terminant par une forme généralement triangulaire.

7. Ensemble hacheur selon la revendication 1, dans lequel lesdites rainures (60") sont configurées pour avoir une partie d'extrémité en amont avec des côtés parallèles et une section en aval se terminant par une forme généralement circulaire.

8. Ensemble hacheur selon la revendication 1, dans lequel lesdites rainures (60, 60', 60"') sont configurées pour avoir une partie latérale de forme rectangulaire et un côté opposé se terminant par une section initiale conique et une section droite.

9. Ensemble hacheur selon la revendication 6, dans lequel lesdites rainures sont configurées pour avoir une section centrale se terminant par une forme ovale.

10. Ensemble hacheur selon la revendication 7, dans lequel lesdites rainures sont configurées pour avoir une section centrale se terminant par une forme ovale.

11. Moissonneuse-batteuse agricole (20) comprenant :
un dispositif de traitement de la récolte séparant le matériau de récolte des résidus de récolte et en déchargeant les résidus de récolte,
un dispositif hacheur rotatif (50),
un ensemble de grille de hacheur (56) selon l'une quelconque des revendications 1 à 10.
